# EUROPÄISCHE PATENTSCHRIFT

(11) **EP 3 788 272 B1**
(45) Veröffentlichungstag und Bekanntmachung des Hinweises auf die Patenterteilung: **04.01.2023**
(21) Anmeldenummer: 19720036.3
(22) Anmeldetag: 09.04.2019
(51) Int. Cl.: F16D 13/50, F16D 13/52

(54) **REIBKUPPLUNGSEINRICHTUNG, HYBRIDMODUL UND ANTRIEBSANORDNUNG FÜR EIN KRAFTFAHRZEUG**
FRICTION CLUTCH UNIT, HYBRID MODULE, AND DRIVE ARRANGEMENT FOR A MOTOR VEHICLE
DISPOSITIF D'EMBRAYAGE A FRICTION, MODULE HYBRIDE ET DISPOSITIF D'ENTRAINEMENT POUR UN VEHICULE AUTOMOBILE

(30) Priorität: 03.05.2018 DE 102018110547
(43) Veröffentlichungstag der Anmeldung: 10.03.2021
(73) Patentinhaber: Schaeffler Technologies AG & Co. KG, 91074 Herzogenaurach (DE)
(72) Erfinder: ASCHOFF, Michael, 77815 Bühl (DE); RÖLL, Marcel, 77833 Ottersweier (DE); HAMMERSTIEL, Fabian, 76189 Karlsruhe (DE); FINKENZELLER, Marc, 77723 Gengenbach (DE); RABER, Christoph, 66564 Ottweiler-Steinbach (DE); VOGEL, Florian, 77815 Bühl (DE)
(86) Internationale Anmeldenummer: PCT/DE2019/100324
(87) Internationale Veröffentlichungsnummer: WO 2019/210902

(56) Entgegenhaltungen:
- EP-A2- 1 065 400
- WO-A2-2009/057926
- US-A1- 2012 292 154

## Beschreibung

Die Erfindung betrifft eine Reibkupplungseinrichtung gemäß dem Oberbegriff des Anspruchs 1, sowie ein Hybridmodul und eine Antriebsanordnung für ein Kraftfahrzeug mit der erfindungsgemäßen Reibkupplungseinrichtung bzw. dem Hybridmodul.

Aus dem Stand der Technik sind Reibkupplungen zur Übertragung von Drehmomenten in Kraftfahrzeugen hinlänglich bekannt.

Sie sind zur meist reibschlüssigen Drehmoment-Übertragung zwischen Kupplungselementen, wie zum Beispiel zwischen Anpressplatten und Kupplungsscheiben eingerichtet. Dabei können sie den DrehmomentÜbertragungspfad je nach Anforderung öffnen und schließen. Angeschlossene Antriebsaggregate, wie zum Beispiel Verbrennungskraftmaschinen, liefern dabei üblicherweise eine schwingungsbehaftete Drehzahl. Üblicherweise sind derartige Reibkupplungseinrichtungen als normal-geschlossene Kupplungen ausgebildet.

Das bedeutet, dass diese Kupplungen mit einer ständig wirkenden axialen Kraft beaufschlagt sind, die bewirkt, dass die Reibscheibe an Mitnahmeelemente, wie zum Beispiel an eine Anpressplatte und eine Gegendruckplatte, angepresst ist und entsprechend dauerhaft reibschlüssig Drehmoment übertragen kann. Von einer Tellerfeder wird üblicherweise als deren elastische Rückstellkraft eine Anpresskraft bewirkt. Um eine derartige Kupplungseinrichtung zu öffnen, ist demzufolge dafür zu sorgen, dass die Wirkung der elastischen Rückstellkraft der Tellerfeder auf die Reibscheibe bzw. ein Lamellenpaket aufgehoben wird. Üblicherweise wird dafür ein sogenannter Drucktopf angewendet, der von einem Betätigungssystem zentral mit einer axialen Betätigungskraft beaufschlagt wird, sodass er den radial äußeren Bereich der Tellerfeder entgegen ihrer elastischen Rückstellkraft verschiebt und somit die axiale Kraftwirkung auf die Reibscheibe bzw. das Lamellenpaket aufhebt oder zumindest verringert. Der Drucktopf ist demzufolge ein Bauteil innerhalb der Ausrückkette der Reibkupplungseinrichtung, der eine von einem Betätigungssystem erzeugte Betätigungskraft auf die Tellerfeder bewirkt.

Insbesondere für die Anwendung in Hybridmodulen wurden bereits trockene Lamellenkupplungen als Trennkupplungen in einem 48V-Hybridsystem zur Kopplung des Verbrennungsmotors mit dem Getriebe entwickelt. Die benötigte Anpresskraft wird durch eine Tellerfeder generiert und ist wiederum durch ein auch als Aktor bezeichnetes Betätigungssystem in ihrer Höhe begrenzt. Kupplungsscheiben mit Belagfederungen ermöglichen in gewissen Grenzen die Einstellung axial wirkender Kräfte.

Zurzeit erhältliche Hybridmodule, die durch Ankopplung eines Verbrennungsmotors an einen Antriebsstrang eines Fahrzeugs einen Elektromotorbetrieb mit einem Verbrennungsmotorbetrieb kombinieren können, weisen meist einen Elektromotor, eine Trennkupplung, deren Betätigungssystem, Lager und Gehäusekomponenten auf, die die drei Hauptkomponenten zu einer funktionstüchtigen Einheit verbinden.

Der Elektromotor ermöglicht das elektrische Fahren, Leistungszuwachs zum Verbrennungsmotorbetrieb und rekuperieren. Die Trennkupplung und deren Betätigungssystem sorgen für das Ankuppeln oder Abkuppeln des Verbrennungsmotors. Wenn ein Hybridmodul mit einer Doppelkupplung derart kombiniert wird, dass sich das Hybridmodul in Drehmomentübertragungsrichtung zwischen Verbrennungsmotor und Getriebe befindet, müssen im Fahrzeug der Verbrennungsmotor, das Hybridmodul, die Doppelkupplung mit ihren Betätigungssystemen und das Getriebe hinter- oder nebeneinander angeordnet werden.

Ein derart positioniertes Hybridmodul wird auch als P2-Hybridmodul bezeichnet. Hybridmodule bzw. deren elektrische Maschinen können auch zum Starten eines angekoppelten Verbrennungsaggregats verwendet werden.

Beim Schließen der Lamellenkupplung im Schubbetrieb zum Andrehen des Verbrennungsmotors bis zum Zündzeitpunkt sollte allerdings das Kupplungsdrehmoment in einem Drehmomentbereich steuerbar sein.

Aus der EP 1 065 400 A2 ist eine Reibkupplungseinrichtung bekannt, die auf den Oberbegriff des Anspruchs 1 lesbar ist.

Der Erfindung liegt die Aufgabe zugrunde, eine Reibkupplungseinrichtung sowie ein damit ausgestattetes Hybridmodul zur Verfügung zu stellen, die in konstruktiv einfacher und verschleißarmer Weise das Starten eines angekoppelten Verbrennungsaggregates mittels der elektrischen Maschine des Hybridmoduls ermöglichen.

Diese Aufgabe wird durch die erfindungsgemäße Reibkupplungseinrichtung nach Anspruch 1, durch das erfindungsgemäße Hybridmodul nach Anspruch 6 sowie die damit ausgestattete Antriebsanordnung nach Anspruch 7 gelöst.

Vorteilhafte Ausgestaltungsformen der Reibkupplungseinrichtung sind in den Unteransprüchen 2 bis 5 angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "radial" und "axial" beziehen sich im Rahmen der vorliegenden Erfindung immer auf die Rotationsache der Reibkupplungseinrichtung.

Die Erfindung betrifft eine Reibkupplungseinrichtung für ein Kraftfahrzeug zur reibschlüssigen Übertragung eines Drehmoments zwischen einer angekoppelten Verbrennungskraftmaschine sowie einem angekoppelten Getriebe, welche eine Kraftübertragungseinrichtung, die insbesondere als Drucktopf ausgestaltet sein kann, sowie eine Tellerfeder umfasst. Das Getriebe kann auch als so genannter Resttriebsstrang bezeichnet werden. Die Kraftübertragungseinrichtung ist zur Übertragung einer von der Tellerfeder ausgeübten oder ausübbaren, im Wesentlichen axial ausgerichteten Druckkraft eingerichtet. Sie umfasst ein mehrere Lamellen aufweisendes Reibpaket, mit welchem bei Zusammendrücken mittels einer axial wirkenden Kraft reibschlüssig Drehmoment übertragbar ist. Axial zwischen dem Reibpaket und der Kraftübertragungseinrichtung ist eine Federeinrichtung angeordnet, mit der in Abhängigkeit vom axialen Federweg der Federeinrichtung in axialer Richtung eine Federkraft auf das Reibpaket aufbringbar ist. Dabei ist die Federeinrichtung derart angeordnet und eingerichtet, dass bei Belastung der Federeinrichtung mit der Druckkraft die Vektoren des von der Federeinrichtung in axialer Richtung erzeugten Kräftepaars im Wesentlichen die gleiche radiale Position aufweisen.

Das erwähnte Kräftepaar sind die beiden axialen Kräfte, deren Reaktionskräfte die Federeinrichtung im statischen Gleichgewicht halten. Die von der Federeinrichtung aufgebrachte Federkraft ist somit die auf das Reibpaket aufzubringende axiale Kraft, um die Lamellen des Lamellenpakets aneinander anzudrücken und derart die Übertragung von Drehmoment zu gewährleisten.

Entsprechend verlaufen die von der Federeinrichtung erzeugten Kräfte, die die Federeinrichtung beim Zusammendrücken in Abhängigkeit vom jeweiligen Federweg generiert, im selben Abstand zur Rotationsachse der Reibkupplungseinrichtung. Mit anderen Worten ist der Radius der von der Federeinrichtung aufgebrachten ringförmigen Streckenlast oder Flächenlast auf beiden Seiten der Federeinrichtung gleich groß. Dies hat den Vorteil, dass die von der Federeinrichtung erzeugten axialen Kräfte nicht radial zueinander versetzt sind, sodass im Wesentlichen die Druckkraft, die von der Federeinrichtung bei deren Belastung erzeugten Reaktionskräfte und somit auch die axiale Kraft zum Zusammendrücken des Lamellenpakets im Wesentlichen den gleichen Abstand zur Rotationsachse aufweisen, so dass die Gefahr eines Verkippens oder Verkantens von Bauteilen im Kraftübertragungspfad und/ oder eine ungleichmäßige axiale Kraftbeaufschlagung der Lamellen gemindert wird.

Das Reibpaket umfasst dabei alternierend an einem Innenlamellenträger und einem Außenlamellenträger angeordnete Lamellen, vorzugsweise als Reibscheiben und Stahllamellen ausgestaltet, wobei insbesondere die von der Federeinrichtung übertragene axiale Kraft auf eine Anpressplatte des Lamellenpakets aufgebracht wird und die eingebrachte axiale Kraft auf der der Anpressplatte axial gegenüberliegenden Seite des Lamellenpakets von einem Gegendruckelement abgestützt wird.

Die Reibkupplungseinrichtung kann weiterhin ein Betätigungssystem aufweisen, mit welchem axial eine Betätigungskraft auf die Kraftübertragungseinrichtung aufbringbar ist, um damit gegen die von der Tellerfeder aufgebrachte Druckkraft zu arbeiten und somit die axiale Kraft auf die Lamellen des Lamellenpakets zu reduzieren und entsprechend die Reibkupplungseinrichtung zu öffnen.

Die Reibkupplungseinrichtung ist insbesondere eine trockene Lamellenkupplung, die als auch K0-Kupplung bezeichnete Trennkupplung in einem Hybridmodul zum An- und Abkoppeln eines Verbrennungsmotors an den und vom Antriebsstrang eines Kraftfahrzeugs ausgebildet ist.

Die Federeinrichtung kann dabei eine ringförmig ausgestaltete Einrichtung sein, an deren Umfang mehrere mechanisch miteinander verbundene Elemente angeordnet sind, mit denen jeweils in Abhängigkeit vom Federweg eine axiale Kraft bewirkbar ist. Alternativ umfasst die Federeinrichtung mehrere Federelemente, die mechanisch nicht aneinander fixiert sind, die jedoch in Ringanordnung zwischen der Kraftübertragungseinrichtung und dem Reibpaket positioniert sind und mit denen ebenfalls jeweils in Abhängigkeit vom Federweg eine axiale Kraft bewirkbar ist.

So kann z.B. die Federeinrichtung eine ringförmige Wellfeder sein, die sich axial erstreckende federbare Formelemente aufweist. Die federbaren Formelemente sind dabei aneinander mechanisch über Zwischenbereiche fixiert.

Durch axiale Verformung der federbaren Formelemente kann die Wellfeder in axialer Richtung in den Winkelpositionen der federbaren Formelemente bei axialem Zusammendrücken in Abhängigkeit vom jeweiligen Federweg entsprechende Kräfte aufbringen.

In einer Ausgestaltung der Reibkupplungseinrichtung ist dabei vorgesehen, dass sich die Wellfeder in radialer Richtung an wenigstens einem Lamellenträger abstützt. Insbesondere kann sich die Wellfeder mit ihrer radialen Innenseite an einem Innenlamellenträger der Reibkupplungseinrichtung abstützen, so dass derart die radiale Position der Wellfeder gesichert ist und demzufolge auch die axiale Position der Wellfeder zwischen der Kraftübertragungseinrichtung und dem Reibpaket gewährleistet ist. Es soll also vorgesehen sein, dass die Weltfeder an einem anderen, in unmittelbarer Nähe der Wellfeder befindlichen Bauteil zentriert ist, wie z.B. auch am Drucktopf oder an der die Wellfeder kontaktierenden Anpressplatte.

In alternativer Ausgestaltung ist vorgesehen, dass die Federeinrichtung einzelne, sich axial erstreckende Federsegmente umfasst, die in Ringform angeordnet sind. Die einzeln federbaren Federsegmente sind dabei nicht mechanisch aneinander fixiert.

In Abhängigkeit der Wellung der Wellfeder bzw. der Anzahl und Formgebung der Federsegmente lässt sich eine möglichst homogene Anlage der Federeinrichtung an dem Reibpaket während der Synchronisation der Drehzahlen von elektrischer Maschine und zu startendem Verbrennungsaggregat umsetzen. Dies ermöglicht ein bestmögliches Verschleiß- und Übertragungsverhalten.

Vorzugsweise sollte die Federeinrichtung eine Federkennlinie mit im Wesentlichen linearem Verlauf aufweisen. Insbesondere ist vorgesehen, dass die Federkennlinie einen zumindest abschnittsweise linearen Verlauf aufweist.

Derart ist optimal in Abhängigkeit vom über das Betätigungssystem eingestellten Federweg die von der Federeinrichtung auf das Reibpaket aufbringbare axiale Kraft modulierbar. Damit ist die Einstellbarkeit der gewünschten Anpresskraft gewährleistet und somit - in Verbindung mit einem im Modulationsbereich bekannten Reibfaktor - die Steuerbarkeit des Kupplungsdrehmomentes.

Weiterhin ist die Federeinrichtung in axialer Richtung an der Kraftübertragungseinrichtung fixiert, um eine vollständige Öffnung der Reibkupplungseinrichtung zu gewährleisten. Im Fall der Ausgestaltung der Federeinrichtung als Wellfeder ist diese insbesondere mit ihren Bereichen zwischen den federbaren Formelementen an der Kraftübertragungseinrichtung mechanisch fixiert, wofür sich insbesondere Nietverbindungen anbieten.

Im Fall der Ausgestaltung der Federeinrichtung als einzelne, sich axial erstreckende Federsegmente sind diese an der Kraftübertragungseinrichtung mechanisch fixiert, wofür ebenfalls Nietverbindungen genutzt werden können.

Die Nietverbindungen bzw. mechanischen Fixierungen können auch zur radialen Zentrierung der Federeinrichtung genutzt werden. Entsprechend kann bei Betätigung des Betätigungssystems axial eine Betätigungskraft auf die Kraftübertragungseinrichtung aufgebracht werden, um damit gegen die von der Tellerfeder aufgebrachte Druckkraft zu arbeiten und somit die axiale Kraft auf die Lamellen des Lamellenpakets zu reduzieren. Dabei vergrößert die Kraftübertragungseinrichtung ihren Abstand zum Lamellenpaket, um dieses zu öffnen. Auf Grund der mechanischen Fixierung der Federeinrichtung an der Kraftübertragungseinrichtung entfernt sich auch die Federeinrichtung vom Lamellenpaket, so dass die Abstände zwischen den Lamellen des Lamellenpakets ungehindert vergrößert werden können und damit die Reibkupplungseinrichtung zuverlässig gelüftet wird.

Die Federeinrichtung ist mit ihrer der Fixierung an der Kraftübertragungseinrichtung axial gegenüberliegenden Seite mechanisch an das Reibpaket angeschlossen, z.B. fixiert in axialer Richtung an einer Anpressplatte des Lamellenpakets, wobei die mechanische Fixierung der Federeinrichtung am Reibpaket derart ausgeführt ist, dass eine Relativ-Rotationsbewegung zwischen der Federeinrichtung und dem Reibpaket ausführbar ist.

Dabei ist die mechanische Fixierung der Federeinrichtung am Reibpaket durch ein Langloch in einem der beiden Bauteile Anpressplatte und Federeinrichtung sowie einen durch das Langloch hindurchführenden Bolzen an dem jeweils anderen Bauteil realisiert, wobei der Bolzen an der seiner Befestigung an dem ihn tragenden Bauteil gegenüberliegenden Seite einen Bolzenkopf aufweist, der quer zur Längsrichtung des Langlochs größer dimensioniert ist als die Weite des Langlochs in dessen Querrichtung. Entsprechend hintergreift der Bolzenkopf das das Langloch ausbildende Material, so dass in axialer Richtung eine Fixierung zwischen der Federeinrichtung und der Anpressplatte realisiert ist, in Umfangsrichtung jedoch um die Länge des Langlochs eine Relativ-Rotationsbewegung zwischen der Federeinrichtung und der Anpressplatte ausführbar ist, so dass bei Übertragung eines Drehmoments mittels der Reibkupplungseinrichtung geringe Reibkräfte an der Federeinrichtung wirken. Ein solcher Bolzen in einem Langloch kann auch als sogenannter Fangniet bezeichnet werden.

Insbesondere diese Ausführungsform sorgt dafür, dass die Drehmomentübertragung formschlüssig über die Lamellen und Lamellenträger erfolgt. Es findet eine Trennung der Funktionen der Drehmomentübertragung und der axialen Kraftbeaufschlagung statt, wobei die Federeinrichtung nicht im Drehmomentübertragungspfad angeordnet ist.

Mit dem erfindungsgemäßen Einsatz der Federeinrichtung kann die Anpresskraft, die auf das Reibpaket wirkt, moduliert werden, um das wirksame Wunschdrehmoment einzustellen. Im geöffneten Zustand der Reibkupplungseinrichtung ist die Lage der zur Kraftmodulation dienenden Federeinrichtung definiert, sodass ein zuverlässiges Lüften des Lamellenpakets gewährleistet ist. Derart lässt sich beim Schließen der Reibkupplungseinrichtung im Schubbetrieb zum Starten eines Verbrennungsaggregats bis zum Zündzeitpunkt das Kupplungsdrehmoment in einem Drehmomentbereich steuern.

Ein weiterer Aspekt der vorliegenden Erfindung ist ein Hybridmodul für ein Kraftfahrzeug zum Ankoppeln einer Verbrennungskraftmaschine sowie eines Getriebes, umfassend eine elektrische Maschine sowie eine erfindungsgemäße Reibkupplungseinrichtung zur Übertragung von Drehmoment zwischen der Verbrennungskraftmaschine und dem Getriebe bzw. einem sogenannten Resttriebstrang. Das erfindungsgemäße Hybridmodul kann eine koaxial angeordnete elektrische Maschine aufweisen, deren Rotor die erfindungsgemäße Reibkupplungseinrichtung radial umgibt. Alternativ kann das erfindungsgemäße Hybridmodul mit einer achsparallelen elektrischen Maschine ausgestattet sein, an deren Rotor eine Riemenscheibe angeschlossen ist, die die erfindungsgemäße Reibkupplungseinrichtung radial umgibt.

Die Erfindung wird ergänzt durch eine Antriebsanordnung für ein Kraftfahrzeug mit einem Antriebsaggregat, insbesondere mit einer Verbrennungskraftmaschine, und einer erfindungsgemäßen Reibkupplungseinrichtung oder einem erfindungsgemäßen Hybridmodul sowie mit einem Getriebe, wobei die Reibkupplungseinrichtung bzw. das Hybridmodul mit der Verbrennungskraftmaschine und dem Getriebe mechanisch verbunden ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Figur 1: eine erfindungsgemäße Reibkupplungseinrichtung im Teilschnitt,
Figur 2: ein Reibpaket der Reibkupplungseinrichtung im Teilschnitt,
Figur 3: eine in der in Figur 2 gezeigten Reibkupplungseinrichtung verwendete Wellfeder in einem Ausschnitt in Ansicht von oben und in einer Schnittansicht,
Figur 4: eine weitere alternative Ausführung eines Reibpakets der erfindungsgemäßen Reibkupplungseinrichtung, und
Figur 5: ein in der in Figur 4 gezeigten Reibkupplungseinrichtung verwendetes Federsegment 80 in Ansicht von oben sowie in Schnittansicht.

Zunächst wird der allgemeine Aufbau der erfindungsgemäßen Reibkupplungseinrichtung 1 erläutert, wie sie in Figur 1 dargestellt ist.

Die Reibkupplungseinrichtung 1 umfasst auf einer gemeinsamen Rotationsachse 2 angeordnet eine eingangsseitige Verzahnung 3, die zur Eintragung eines Drehmoments mittels eines hier koppelbaren Bauteils, wie zum Beispiel eines Zweimassenpendels, eingerichtet ist. Die eingangsseitige Verzahnung 3 ist über Nietverbindungen 4 mit dem Außenlamellenträger 5 der Reibkupplungseinrichtung 1 mechanisch fest verbunden.

Der Außenlamellenträger 5 ist über ein Rotationslager 9 auf einer Nabe 8 rotatorisch gelagert. Des Weiteren umfasst die Reibkupplungseinrichtung 1 einen Innenlamellenträger 6. Am Innenlamellenträger 6 angeordnete Stahllamellen 31 sind alternierend mit am Außenlamellenträger 5 angeordneten Reibscheiben 33 angeordnet und bilden zusammen ein Reibpaket 30 aus. Der Innenlamellenträger 6 weist an seiner radialen Innenseite eine ausgangsseitige Verzahnung 7 auf, zum Anschluss eines Drehmoment-Übertragungselements, wie zum Beispiel einer Welle.

Des Weiteren umfasst die Reibkupplungseinrichtung 1 eine Tellerfeder 20, von der eine Druckkraft 21 auf eine Kraftübertragungseinrichtung 10, auch als Drucktopf bezeichnet, aufbringbar ist, um eine axial wirkende Kraft 40 in das Reibpaket 30 einzutragen und dieses somit zusammenzupressen, sodass ein Drehmoment von dem Außenlamellenträger 5 über das Reibpaket 30 auf den Innenlamellenträger 6 übertragen werden kann. Die von der Tellerfeder 20 eingebrachte Druckkraft 21 wird dabei auf der axial gegenüberliegenden Seite des Reibpakets 30 von einem Gegendruckelement 34 aufgenommen, welches ein Bestandteil des Innenlamellenträgers 6 ist.

Es ist ersichtlich, dass bei Aufbringung der von der Tellerfeder 20 bewirkten Druckkraft 21 die auch als Drucktopf bezeichnete Kraftübertragungseinrichtung 10 axial verschoben wird. Eine zwischen der Kraftübertragungseinrichtung 10 und dem Reibpaket 30 axial angeordnete Federeinrichtung 50 wird derart über einen axialen Federweg 51 komprimiert. Vorzugsweise weist die Federeinrichtung 50 eine lineare Federkennlinie auf, sodass in Abhängigkeit von der Größe des jeweiligen axialen Federwegs 51 eine entsprechende axiale Kraft auf das Reibpaket 30 ausgeübt wird. Derart lässt sich in einfacher Weise die auf das Reibpaket 30 wirkende Anpresskraft modulieren.

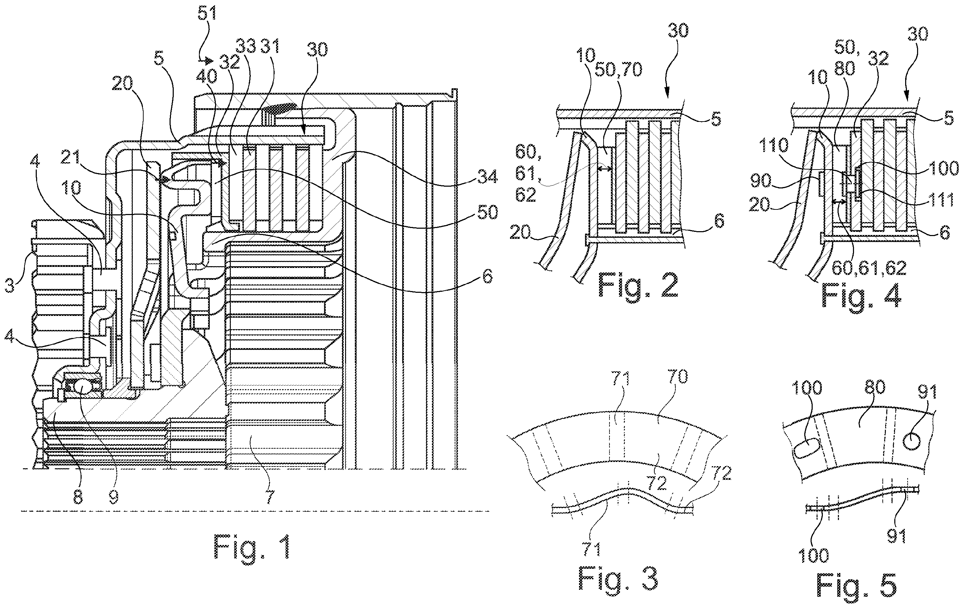

In den Figuren 2-5 sind unterschiedliche Ausführungsformen der erfindungsgemäß einzusetzenden Federeinrichtung 50 dargestellt.

Die Figuren 2 und 3 zeigen dabei die Ausführung der Federeinrichtung 50 als ringförmige Wellfeder 70. Die Wellfeder 70 ist in Ringform ausgebildet und axial zwischen der Kraftübertragungseinrichtung 10 und dem Reibpaket 30 positioniert. In der in Figur 2 dargestellten Ausführungsform stützt sich die ringförmige Wellfeder 70 mit ihrem radialen Innenrand auf dem Innenlamellenträger 6 ab und ist derart in radialer Richtung positioniert.

Wie insbesondere aus Figur 3 ersichtlich ist, umfasst die ringförmige Wellfeder 70 sich axial erstreckende Formelemente 71 in Form von hügelförmigen Erhebungen. Zwischen diesen Formelementen 71 sind Zwischenbereiche 72 ausgebildet. Insbesondere kann damit die ringförmige Wellfeder 70 mit den Zwischenbereichen 72 an der Kraftübertragungseinrichtung 10 axial anliegen und mit den Formelementen 71 gegen das Reibpaket 30 drücken.

Eine alternative Ausführungsform einer Federeinrichtung 50 ist in den Figuren 4 und 5 dargestellt, wobei hier die Federeinrichtung 50 mehrere, in Umfangsrichtung voneinander entkoppelte Federsegmente 80 aufweist, die in axialer Richtung elastisch federbar sind. Diese Federsegmente 80 sind mit an der Kraftübertragungseinrichtung 10 ausgebildeten Fixierungseinrichtungen 90, insbesondere als durch entsprechende Löcher 91 im Federsegment 80 hindurchführende Niete, , an der Kraftübertragungseinrichtung 10 fixiert. An der axial gegenüberliegenden Seite weist die Anpressplatte 32 des Reibpakets 30 ein Langloch 100 auf, durch welches ein Bolzen 110 geführt ist, dessen Bolzenkopf 111 auf der der Kraftübertragungseinrichtung 10 axial gegenüberliegenden Seite ausgebildet ist, sodass ein leichter Winkelversatz in dieser Fixierung des Federsegments 80 in Bezug zur Anpressplatte 32 bei axialer Kraftbeaufschlagung möglich ist.

Es ist ersichtlich, dass ein Befestigungsbereich am Loch 91 zur Fixierung an der Kraftübertragungseinrichtung 10 einen axialen Abstand zum Befestigungsbereich im Bereich des Langlochs 100 aufweist, sodass das Federsegmente 80 zwischen diesen beiden Bereichen eine federnde Wirkung realisieren können.

Wie aus den beiden Figuren 2 und 4 ersichtlich ist, ist eine bei Kraftbeaufschlagung mittels der Tellerfeder 20 resultierende Federwirkung bzw. ein dadurch realisiertes Kräftepaar 60 mit einer auf das Reibpaket 30 gerichteten Federkraft und einer diesbezüglich entgegengerichteten abstützenden Kraft 62 auf der gleichen Wirkungslinie bzw. auf dem gleichen Abstand zur gemeinsamen Rotationsachse angeordnet, sodass federkraftbelastete Bauteile wie zum Beispiel die Lamellen des Reibpakets 30 gleichmäßig belastet werden und nicht zu einem Verkanten neigen.

Mit der hier vorgeschlagenen Reibkupplungseinrichtung wird eine Einrichtung zur Verfügung gestellt, die unter Modulation der auf das Reibpaket wirkenden Anpresskraft in konstruktiv einfacher und verschleißarmer Weise das Starten eines angekoppelten Verbrennungsaggregates mittels einer angeschlossenen elektrischen Maschine ermöglicht.

### Bezugszeichenliste

- 1: Reibkupplungseinrichtung
- 2: Rotationsachse
- 3: Eingangsseitige Verzahnung
- 4: Nietverbindung
- 5: Außenlamellenträger
- 6: Innenlamellenträger
- 7: Ausgangsseitige Verzahnung
- 8: Nabe
- 9: Rotationslager
- 10: Kraftübertragungseinrichtung
- 20: Tellerfeder
- 21: Druckkraft
- 30: Reibpaket
- 31: Stahllamelle
- 32: Anpressplatte
- 33: Reibscheibe
- 34: Gegendruckelement
- 40: axial wirkende Kraft
- 50: Federeinrichtung
- 51: axialer Federweg
- 60: Kräftepaar
- 61: Federkraft
- 62: abstützende Kraft
- 70: ringförmige Wellfeder
- 71: Formelement
- 72: Zwischenbereich
- 80: Federsegment
- 90: Fixierungseinrichtung
- 91: Loch
- 100: Langloch
- 110: Bolzen
- 111: Bolzenkopf

## Patentansprüche

1. Reibkupplungseinrichtung (1) für ein Kraftfahrzeug zur reibschlüssigen Übertragung eines Drehmoments zwischen einer angekoppelten Verbrennungskraftmaschine sowie einem angekoppelten Getriebe, umfassend eine Kraftübertragungseinrichtung (10), insbesondere als Drucktopf ausgestaltet, sowie eine Tellerfeder (20), wobei die Kraftübertragungseinrichtung (10) zur Übertragung einer von der Tellerfeder (20) ausgeübten oder ausübbaren im Wesentlichen axial ausgerichteten Druckkraft (21) eingerichtet ist, sowie umfassend ein mehrere Lamellen (31, 32) aufweisendes Reibpaket (30), mit welchem bei Zusammendrücken mittels einer axial wirkenden Kraft (40) reibschlüssig Drehmoment übertragbar ist, wobei axial zwischen dem Reibpaket (30) und der Kraftübertragungseinrichtung (10) eine Federeinrichtung (50) angeordnet ist, mit der in Abhängigkeit vom axialen Federweg (51) der Federeinrichtung (50) in axialer Richtung eine Federkraft (61) auf das Reibpaket (30) aufbringbar ist, wobei die Federeinrichtung (50) derart angeordnet und eingerichtet ist, dass bei Belastung der Federeinrichtung (50) mit der Druckkraft (21) die Vektoren des von der Federeinrichtung (50) in axialer Richtung erzeugten Kräftepaars (60) im Wesentlichen die gleiche radiale Position aufweisen, **dadurch gekennzeichnet, dass** die Federeinrichtung (50) in axialer Richtung an der Kraftübertragungseinrichtung (10) fixiert ist, um eine vollständige Öffnung der Reibkupplungseinrichtung (1) zu gewährleisten, wobei die Federeinrichtung (50) mit ihrer der Fixierung an der Kraftübertragungseinrichtung (10) axial gegenüberliegenden Seite mechanisch an das Reibpaket (30) angeschlossen ist, insbesondere in axialer Richtung an einer Anpressplatte (31) des Lamellenpakets (30) fixiert ist, wobei die mechanische Fixierung der Federeinrichtung (50) am Reibpaket (30) derart ausgeführt ist, dass eine Relativ-Rotationsbewegung zwischen der Federeinrichtung (50) und dem Reibpaket (30) ausführbar ist, und wobei die mechanische Fixierung der Federeinrichtung (50) am Reibpaket (30) durch ein Langloch (100) in einem der beiden Bauteile Anpressplatte (31) und Federeinrichtung (50) sowie einen durch das Langloch (100) hindurchführenden Bolzen (110) an dem jeweils anderen Bauteil realisiert ist, wobei der Bolzen (110) an der seiner Befestigung an dem ihn tragenden Bauteil gegenüberliegenden Seite einen Bolzenkopf (111) aufweist, der quer zur Längsrichtung des Langlochs (100) größer dimensioniert ist als die Weite des Langlochs (100) in dessen Querrichtung.

2. Reibkupplungseinrichtung nach Anspruch 1, **dadurch gekennzeichnet, dass** die Federeinrichtung (50) eine ringförmige Wellfeder (70) ist, die axial sich erstreckende federbare Formelemente (71) aufweist.

3. Reibkupplungseinrichtung nach Anspruch 2, **dadurch gekennzeichnet, dass** sich die Wellfeder (70) in radialer Richtung an wenigstens einem Lamellenträger (5, 6) abstützt.

4. Reibkupplungseinrichtung nach Anspruch 1, **dadurch gekennzeichnet, dass** die Federeinrichtung (50) einzelne, sich axial erstreckende Federsegmente (80) umfasst, die in Ringform angeordnet sind.

5. Reibkupplungseinrichtung nach einem der vorhergehenden Ansprüche,
**dadurch gekennzeichnet, dass** die Federeinrichtung (50) eine Federkennlinie mit im Wesentlichen linearem Verlauf aufweist.

6. Hybridmodul für ein Kraftfahrzeug zum Ankoppeln einer
Verbrennungskraftmaschine sowie eines Getriebes, umfassend eine elektrische Maschine sowie eine Reibkupplungseinrichtung (1) gemäß einem der Ansprüche 1 bis 5.

7. Antriebsanordnung für ein Kraftfahrzeug mit einem Antriebsaggregat, insbesondere mit einer Verbrennungskraftmaschine, und einer Reibkupplungseinrichtung (1) gemäß einem der Ansprüche 1 bis 5 oder einem Hybridmodul gemäß Anspruch 6, sowie mit einem Getriebe, wobei die Reibkupplungseinrichtung (1) bzw. das Hybridmodul mit der Verbrennungskraftmaschine und dem Getriebe mechanisch verbunden ist.

## Claims

1. A friction clutch unit (1) for a motor vehicle for the frictional transmission of torque between a coupled internal combustion engine and a coupled gear box, comprising a force transmission device (10), particularly designed as a pressure pot, and a cup spring (20), wherein the force transmission device (10) for transmitting a compressive force (21) exerted or capable of being exerted by the cup spring (20) is oriented in an essentially axial direction, and comprising a friction pack (30) having several cleats (31, 32) with which torque can be frictionally transmitted on compression by means of an axially acting force (40), wherein a spring device (50) is arranged axially between the friction pack (30) and the force transmission device (10), with which, depending on the axial spring deflection (51) of the spring device (50), a spring force (61) can be applied to the friction pack (30) in the axial direction, wherein the spring device (50) is arranged and set up in such a way that when the spring device (50) is loaded with the compressive force (21), the vectors of the force couple (60) generated in the axial direction by the spring device (50) have essentially the same radial position, **characterised in that** the spring device (50) is fixed in the axial direction on the force transmission device (10) in order to ensure complete opening of the friction clutch unit (1), wherein the spring device (50) is mechanically connected to the friction pack (30) by its side axially opposite the fixing on the force transmission device (10), particularly fixed in the axial direction on a pressure plate (31) of the cleat pack (30), wherein the mechanical fixing of the spring device (50) on the friction pack (30) is designed in such a way that a relative rotational movement between the spring device (50) and the friction pack (30) can be executed, and wherein the mechanical fixation of the spring device (50) on the friction pack (30) is achieved by a slot (100) in one of the two components pressure plate (31) and spring device (50) and a bolt (110) leading through the slot (100) on the respective other component, wherein the bolt (110) has a bolt head (111) on the side opposite its attachment to the component carrying it, which is dimensioned larger transversely to the longitudinal direction of the slot (100) than the width of the slot (100) in its transverse direction.

2. The friction clutch unit according to claim 1, **characterised in that** the spring device (50) is an annular corrugated spring (70) which has axially extending resilient shaped elements (71).

3. The friction clutch unit according to claim 2, **characterised in that** the corrugated spring (70) is supported in the radial direction on at least one cleat carrier (5, 6).

4. The friction clutch unit according to claim 1, **characterised in that** the spring device (50) comprises individual, axially extending spring segments (80) which are arranged in the form of a ring.

5. The friction clutch unit according to any one of the preceding claims, **characterised in that** the spring device (50) has a spring characteristic with an essentially linear course.

6. A hybrid module for a motor vehicle for coupling an internal combustion engine and a gear box, comprising an electric machine and a friction clutch unit (1) according to any one of claims 1 to 5.

7. A drive arrangement for a motor vehicle with a drive unit, in particular having an internal combustion engine, and a friction clutch unit (1) according to any one of claims 1 to 5 or a hybrid module according to claim 6, and having a gear box, wherein the friction clutch unit (1) or the hybrid module is mechanically connected with the internal combustion engine and the gear box.

## Revendications

1. Dispositif d'embrayage à friction (1) pour un véhicule automobile pour la transmission par friction d'un couple entre un moteur à combustion interne couplé et une boîte de vitesse couplée, comprenant un dispositif de transmission de force (10), notamment réalisé sous forme d'enceinte de pression, et un diaphragme (20), le dispositif de transmission de force (10) étant conçu pour transmettre une force de compression (21) orientée sensiblement axialement exercée ou susceptible d'être exercée par le diaphragme (20) et comprenant un bloc de friction (30) présentant plusieurs disques (31, 32) qui peut transmettre un couple par friction au moyen d'une force agissant axialement (40) lors d'une compression, axialement entre le bloc de friction (30) et le dispositif de transmission de force (10) étant disposé un dispositif à ressort (50), avec lequel, en fonction de la course axial (51) du dispositif à ressort (50), une force de ressort (61) peut être appliquée sur le bloc de friction (30) dans la direction axiale, le dispositif à ressort (50) étant conçu et disposé de telle sorte que, lorsque le dispositif à ressort (50) est chargé par la force de compression (21), les vecteurs du couple de forces (60) généré dans la direction axiale par le dispositif à ressort (50) présentent sensiblement la même position radiale, **caractérisé en ce que** le dispositif à ressort (50) est fixé dans la direction axiale sur le dispositif de transmission de force (10) afin d'assurer une ouverture complète du dispositif d'embrayage à friction (1), le dispositif à ressort (50) par son côté axialement opposé à la fixation sur le dispositif de transmission de force (10) étant raccordé mécaniquement au bloc de friction (30), notamment fixé dans la direction axiale sur un plateau de compression (31) du bloc de friction (30), la fixation mécanique du dispositif à ressort (50) sur le bloc de friction (30) étant réalisée de telle sorte qu'un mouvement de rotation relatif entre le dispositif à ressort (50) et le bloc de friction (30) puisse être réalisé et la fixation mécanique du dispositif à ressort (50) sur le bloc de friction (30) étant réalisée par un trou oblong (100) dans l'un des deux éléments parmi le plateau de compression (31) et le dispositif à ressort (50) et par un boulon (110) traversant le trou oblong (100) sur l'autre élément respectif, le boulon (110) présentant une tête de boulon (111) sur le côté opposé à sa fixation sur l'élément qui le porte, qui est dimensionnée plus grande transversalement à la direction longitudinale du trou oblong (100) que la largeur du trou oblong (100) dans sa direction transversale.

2. Dispositif d'embrayage à friction selon la revendication 1, **caractérisé en ce que** le dispositif à ressort (50) est un ressort ondulé annulaire (70) qui présente des éléments profilés élastiques s'étendant axialement (71).

3. Dispositif d'embrayage à friction selon la revendication 2, **caractérisé en ce que** le ressort ondulé (70) s'appuie dans la direction radiale sur au moins un support de disques (5, 6).

4. Dispositif d'embrayage à friction selon la revendication 1, **caractérisé en ce que** le dispositif à ressort (50) comprend des segments de ressort (80) individuels s'étendant axialement qui sont disposés en forme d'anneau.

5. Dispositif d'embrayage à friction selon l'une quelconque des revendications précédentes, **caractérisé en ce que** le dispositif à ressort (50) présente une caractéristique de ressort avec une course sensiblement linéaire.

6. Module hybride pour un véhicule automobile pour coupler un moteur à combustion interne et une boîte de vitesse, comprenant un moteur électrique et un dispositif d'embrayage à friction (1) selon l'une quelconque des revendications 1 à 5.

7. Dispositif d'entraînement pour un véhicule automobile doté d'un groupe motopropulseur, notamment doté d'un moteur à combustion interne, et d'un dispositif d'embrayage à friction (1) selon l'une quelconque des revendications 1 à 5 ou d'un module hybride selon la revendication 6 et doté d'une boîte de vitesse, dans lequel le dispositif d'embrayage à friction (1) ou le module hybride est relié mécaniquement au moteur à combustion interne et à la boîte de vitesse.
